# EUROPEAN PATENT APPLICATION

(11) **EP 4 556 518 A1**
(43) Date of publication of application: **21.05.2025**
(21) Application number: 24212997.1
(22) Date of filing: 14.11.2024
(51) Int. Cl.: C08K 3/38, C08K 5/5435, C08L 71/00

(54) **THERMALLY CONDUCTIVE AND ELECTRICALLY INSULATING HIGH TEMPERATURE POLYMERS**

(30) Priority: 15.11.2023 US 202363599276 P
(71) Applicant: Eaton Intelligent Power Limited, Dublin 4 (IE)
(72) Inventor: ZEKRIARDEHANI, Shahab, Dublin (IE); MAPKAR, Javed Abdurrazzaq, Dublin (IE); PATEL, Bhavin N., Dublin (IE)
(74) Representative: Schwan Schorer & Partner mbB

(57) **Abstract**

Thermally conductive and electrically insulating PAEK nanocomposite materials are provided that can exhibit good mechanical properties at elevated temperatures (up to 200 deg C). This class of high temperature polymers are thermally conductive and electrically insulating yet have medium viscosity which enables then to be useful for injection molding of thin sections.

## Description

### CROSS-REFERENCES TO RELATED APPLICATIONS

This application claims the benefit of U.S. Provisional Application No. 63/599,276, filed November 15, 2023, which is incorporated by reference herein in its entirety.

### BACKGROUND

There is an increasing focus on using polymer materials for light weight applications in aerospace and electrified vehicles. As the electric motor industry moves to 800 volt (V)+ electric motors, improved insulation materials will be required to avoid overheating. Polymer insulation materials can be used for stator encapsulation, enclosures, battery cases, heat sinks, high power connectors (e.g., 450A to 850 A), electrical power distributors, connectors for aircraft engines, external lighting, electric power systems, and electric actuators.

The high operating temperatures of aerospace and electric vehicle systems require high temperature polymers. For example, the use of thermally conductive potting or encapsulating resins in electric vehicle systems can decrease operating temperatures to improve power output, efficiency, and motor life.

Existing thermally conductive and electrical insulating polymers such as epoxy resins and polyurethanes can exhibit certain disadvantages. Epoxy encapsulants can exhibit lower temperature brittleness, heat of reaction, and shrinkage during curing. Polyurethane encapsulants offer less resistance to chemical exposure and high temperatures (above 130 deg C). Silicones typically exhibit lower rigidity, and high coefficient of thermal expansion (CTE) which can cause problems in applications with high thermal cycling. Existing thermally conductive and electrical insulating polymers can also exhibit large drop in mechanical properties at higher temperate which makes them less suitable for stator encapsulation applications.

Alternative high temperature polymer resins, such as for example, poly(aryl ether ketone) (PAEK) polymers such as a poly(ether ether ketone) (PEEK) or poly(ether ketone ketone) (PEKK), can be used for preparation of thermally conductive insulation materials. Unfortunately, the high viscosity of such polymer compositions, combined with inclusion of thermally conductive fillers significantly further increases the viscosity which results in poor processability and limits its application.

CN104174895A discloses an electric hand drill having a handle cover prepared from a PEEK composite comprising 50-80 parts PEEK, 10-25 parts polyethersulfone, 5-25 parts reinforcing fiber, 25-40 parts thermal conductive filler, 0.2-3 parts coupling agent, and 0.3-2 parts antioxidant.

CN108274682A discloses a carbon fiber reinforced PEEK composite automobile wheel hub.

CN108822489A discloses an electrically conductive PEEK material comprising 60-92% PEEK, 5-30% modified carbon black, and 3-30% graphite.

CN109749354A discloses a PEEK composite material including 20-80 parts by mass PEEK, 5-30 parts potassium titanate whisker fibers, 5-80 parts glass microspheres, and 0.1-2 parts processing aids selected from ester stearic acid, metal soaps, calcium stearate, zinc stearate, pentaerythritol stearate, and silicone masterbatches.

US2020/0395144A1 discloses a method for manufacturing an electrically conductive composite material comprising mixing a polyketone with 20-45% short chain carbon fibers and heating the mixture.

There is a need for thermally conductive and electrically insulating PAEK polymer materials that can meet mechanical properties requirements at higher temperatures (up to 200 deg C) and exhibit decreased melt viscosity for improved processability.

### SUMMARY

Thermally conductive and electrically insulating PAEK nanocomposite materials are provided that can perform at elevated temperatures (up to 200 deg C). This class of high temperature polymers are thermally conductive and electrically insulating yet have medium viscosity which enables then to be used for injection molding of thin sections.

The thermally conductive PAEK nanocomposite polymers of the disclosure exhibit Melt Flow Index (MFI) of at least 12 g/10 min under ASTM D1238. In some cases, the thermally conductive PAEK nanocomposite polymers of the disclosure exhibit an MFI of at least 14 g/10 min, or in some cases, at least 20 g/10 min, or at least 25 g/10 min, at least 30 g/10 min, or at least 35 g/10 min. In some cases, the inventive thermally conductive PAEK nanocomposite polymers exhibit an MFI in the rage of 12-60 g/10 min, 14-50 g/10 min, or 14-40 g/10 min under ASTM D1238 at 380 °C and 5 kg.

A thermally conductive polymer composite material is provided, wherein the thermally conductive polymer composite material is prepared from a composition comprising a poly(aryl ether ketone) (PAEK) resin; a plurality of thermally conductive ceramic fillers; and a dispersing and processing additive. In some cases, the PAEK base resin is selected from the group consisting of a poly(ether ether ketone) (PEEK) and a poly(aryl ether ketone ketone) (PEKK).

In some cases, the composition comprises the PAEK base resin in a range of from about 30 wt% to about 80 wt%, about 50 wt% to about 65 wt%, or about 55 wt% to about 57 wt%.

In some cases, the plurality of thermally conductive ceramic fillers are independently selected from the group consisting of selected from boron nitride (BN), aluminum nitride (AlN), boron nitride-aluminum nitride composite (BN-AlN), silicon nitride (Si₃N₄), silicon carbide (SiC), aluminum oxide (Al₂O₃), zinc oxide (ZnO), and magnesium oxide (MgO).

In some cases, the plurality of thermally conductive ceramic fillers comprise a first thermally conductive filler comprising a thermally conductive ceramic flake filler; and a second thermally conductive filler comprising a thermally conductive ceramic platelet filler, optionally further comprising thermally conductive ceramic filler clusters. In some cases, the thermally conductive ceramic flake filler is a thermally conductive ceramic flake microfiller. In some cases, the thermally conductive ceramic flake filler has a particle size distribution D50 in a range of about 65 micrometers to about 530 micrometers. In some cases, the thermally conductive ceramic platelet filler is a thermally conductive ceramic platelet microfiller. In some cases, the thermally conductive ceramic platelet filler has a particle size distribution D50 in a range of about 0.5 micrometers to about 190 micrometers. In some cases, the composition comprises first thermally conductive filler in a range from about 5 wt% to about 30 wt%, about 5 wt% to about 20 wt%, or about 10 wt% to about 15 wt%. In some cases, the composition comprises the second thermally conductive ceramic filler in a range from about 15 wt% to about 40 wt%, about 15 wt% to about 30 wt%, or about 20 wt% to about 25 wt%. In some cases, the composition comprises a weight ratio of first conductive ceramic filler to second conductive ceramic filler from about 1:6 to about 4:3, from about 1:4 to about 1:1, or from about 2:5 to about 3:4. In some cases, the composition comprises the plurality of thermally conductive ceramic fillers in a combined range between about 20 wt% to about 70 wt%, about 25 wt% to about 60 wt%, about 30 wt% to about 50 wt%, about 35 wt% to about 45 wt%, or about 38 wt% to about 44 wt%.

In some cases, the dispersing and processing additive is selected from the group consisting of nanostructured flow modifiers, silanes, waxes, liquid crystal polymers, calcium stearates, polyhexylbenzothioamide (PHBTA), and polyhexyl phenylacetamide (PHPA). In some cases, the nanostructured flow modifier is selected from the group consisting of polyhedral oligomeric silsesquioxanes (POSS) and silanol-POSS. In some cases, the composition comprises the dispersing and processing additive in a range from about 0.1 wt% to about 10 wt%, about 1 wt% to about 5 wt%, or about 3 wt% to about 5 wt%.

In some cases, the composition further comprises one or more structural fillers, optionally wherein the structural fillers are selected from the group consisting of glass fiber, high silica glass fiber, aluminum silicate fiber, ceramic fiber, mullite fiber, basalt fiber, and carbon fiber.

A thermally conductive polymer composite material is provided, wherein the composite material is prepared from a composition comprising 50-65 wt% of a polyaryletherketone (PAEK); 5-20 wt% of a thermally conductive ceramic flake filler; 15-30 wt% of a thermally conductive ceramic platelet filler, optionally further comprising thermally conductive ceramic filler clusters; and 1-5 wt% of a nanostructured flow modifier.

In some cases, the thermally conductive polymer composite material according to the disclosure exhibit one or more of: melt flow index (MFI) > 14 g/10 min, > 20 g/ 10 min, > 25 g/10 min, > 30 g/10 min, or > 35 g/10 min at 380 °C, 5 kg; thermal conductivity > 3.0 W/m-K, or > 3.5 W/m-K; tensile strength at 25 deg C > 70 MPa, or > 80 MPa; tensile strength at 160 deg C > 25 MPa, or > 30 MPa; and tensile strength at 190 deg C > 15 MPa, or > 20 MPa.

A method of making a PAEK nanocomposite encapsulated stator is provided, the method comprising mixing a PAEK nanocomposite composition; heating the PAEK nanocomposite composition to a processing temperature to form a melt processed PAEK nanocomposite composition; extruding and/or injection molding the melt processed PAEK nanocomposite composition around at least a portion of a stator; and cooling the extruded PAEK nanocomposite to provide the encapsulated stator, wherein the PAEK nanocomposite composition comprises a poly(aryl ether ketone) (PAEK) resin; a plurality of thermally conductive ceramic fillers; and a dispersing and processing additive. In some cases, the processing temperature is between about 350 and about 400 deg C.

### BRIEF DESCRIPTION OF THE DRAWINGS

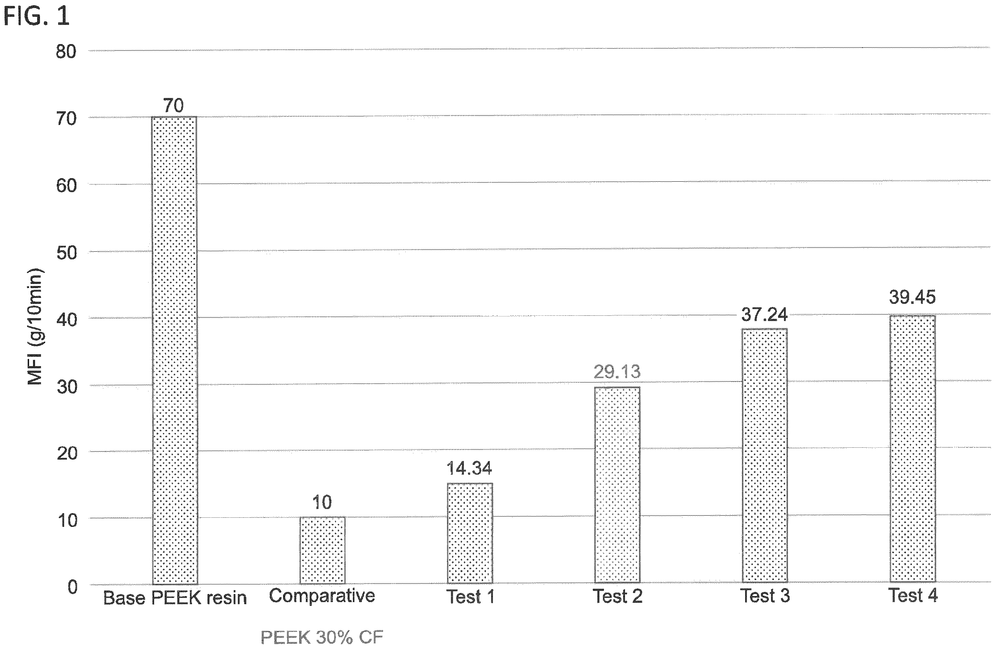

FIG. 1 shows a graph of Melt Flow Index (MFI) for a base PEEK resin, a comparative commercially available PEEK CF30 having 30% carbon fiber fill, and 4 inventive polymers prepared from PEEK nanocomposite test formulation 1 (test 1), PEEK nanocomposite test formulation 2 (test 2), PEEK nanocomposite test formulation 3 (test 3), and PEEK nanocomposite test formulation 4 (test 4). The inventive polymers from test formulations exhibited increased MFI in a range of from 14 to 39 g/10 min compared to commercial PEEK CF30 exhibiting MFI of 10 g/10 min.

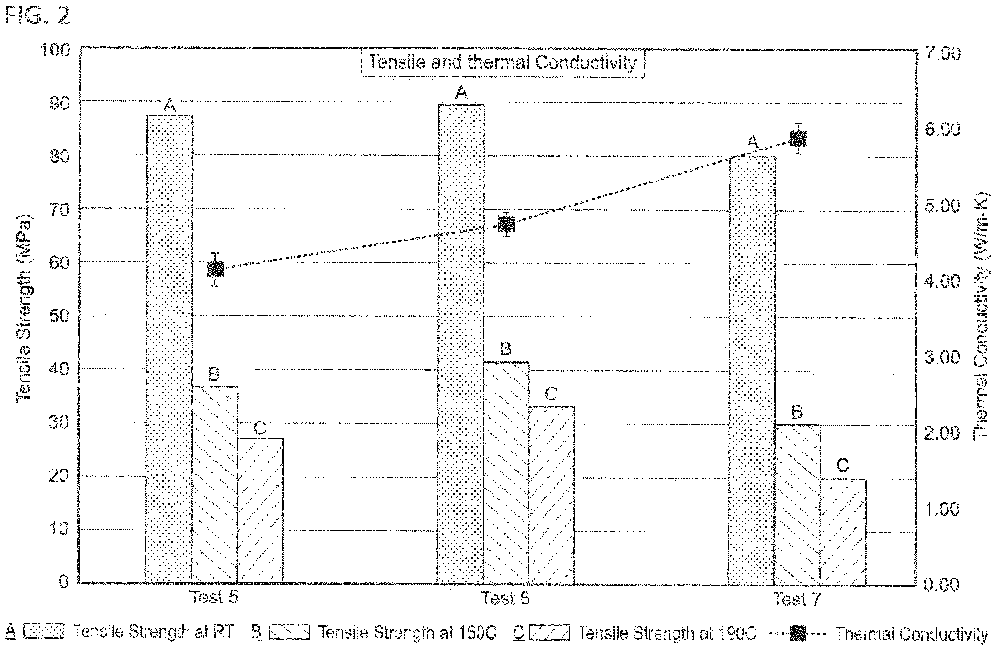

FIG. 2 shows a bar graph of Tensile Strength (MPa) at room temperature (RT; 25 deg C), 160 deg C, and 190 deg C for three inventive polymers prepared from PEEK nanocomposite test formulations 5, 6 and 7, respectively, exhibiting Tensile Strength at RT in a range of from about 80 MPa to about 90 MPa; Tensile Strength at 160 deg C in a range from about 30 MPa to about 42 MPA, and Tensile Strength at 190 deg C in a range of from about 20 MPa to about 34 MPa. FIG. 2 also shows a graph of Thermal Conductivity (W/m-K) of three inventive polymers prepared from PEEK nanocomposite test formulations 5, 6, and 7, respectively, exhibiting Thermal Conductivity in a range between about 3.5 to about 6.0 W/m-K.

### DETAILED DESCRIPTION OF THE INVENTION

Thermally conductive and electrically insulating PAEK nanocomposite materials are provided that can perform at elevated temperatures (up to 200 deg C). This class of high temperature polymers are thermally conductive and electrically insulating yet have medium viscosity which enables then to be used for injection molding of thin sections.

### Definitions

The singular forms "a", "an" and "the" are intended to include the plural forms as well, unless the context clearly indicates otherwise.

The term "and/or" refers to and encompasses any and all possible combinations of one or more of the associated listed items.

The term "about," when referring to a measurable value such as an amount of a compound, dose, time, temperature, and the like, is meant to encompass variations of +/-10%, 5%, 1%, 0.5%, or even 0.1% of the specified amount.

The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms, including technical and scientific terms used in the description, have the same meaning as commonly understood by one of ordinary skill in the art to which this disclosure belongs. In the event of conflicting terminology, the present specification is controlling.

All patents, patent applications and publications referred to herein are incorporated by reference in their entirety.

Unless otherwise specified, the term "room temperature" refers to about 25 °C.

The term "nanofiller" refers to a filler having a shape with nanoscale size in one, two, or three dimensions and at least one dimension in the 1-100 nm range.

The term "submicronfiller" refers to having a shape with submicron scale size in one, two, or three dimensions with no dimension < 100 nm and a mean particle size in a range of 0.1-1 microns.

The term "microfiller" refers to a filler having a shape with micron scale size in one, two, or three dimensions with no dimension < 100 nm and a mean particle size in a range of 1-800 microns.

The term "thermally conductive" in reference to the thermally conductive PAEK nanocomposite polymers of the disclosure refers to nanocomposites exhibiting a thermal conductivity of at least 3.0 W/m-K, or at least 3.5 W/m-K.

For particle size distributions, the median is called D50 (or Dx50 when following certain ISO guidelines). The D50 is the size in microns that splits the distribution with half above and half below this diameter. The D10 represents the 10% of the total particles that are smaller than this size. The D90 represents 90% of the total particles are smaller than this diameter.

The embodiments described in one aspect of the present disclosure are not limited to the aspect described. The embodiments may also be applied to a different aspect of the disclosure as long as the embodiments do not prevent these aspects of the disclosure from operating for its intended purpose.

### Compositions

The PAEK nanocomposite compositions comprise a plurality of conductive fillers and a flow modifier and dispersing agent. Various mixtures of conductive fillers including but not limited to boron nitride, aluminum oxide, aluminum nitride, and zinc oxide in different sizes and shapes were mixed with each other and the base resin to optimize thermal conductivity. Selection of the appropriate conductive fillers (size, shape, loading) was found to be useful to achieve the highest thermal conductivity at the lowest particle loading to minimize the negative impact of viscosity, and to further improve mechanical, rheological, and thermal properties of the material. In some cases, the conductive fillers comprising nanoparticles (nanofillers) were added to the mixture to further reduce the viscosity and increase toughness and strength of the material. In some cases, the nanofillers may include nano alumina and/or nano boron nitride. Table 1 shows exemplary inventive PAEK nanocomposite formulations.

**Table 1. Inventive Formulations**

| Ingredient | Exemplary Material | Concentration (wt.%) | | |
|---|---|---|---|---|
| | | Formula A | Formula B | Formula C |
| PAEK Base resin | Polyetheretherketone (PEEK) | 30-80 | 55-57 | 55-57 |
| Thermally Conductive additive 1 | Boron nitride filler flake | 5-30 | 5-20 | 10-15 |
| Thermally Conductive additive 2 | Mixture of boron nitride platelets and clusters | 15-40 | 15-30 | 20-25 |
| Flow modifier and dispersing agent | Nanostructured flow modifier | 1-5 | 1-5 | 2-3 |

The inventive thermally conductive PAEK nanocomposite polymers exhibit thermal conductivity of at least 3.5 W/m-K, or within a range between about 3.5 to about 6.0 W/m-K, or between about 4.0 to about 6.0 W/m-K or at least 3.5 W/m-K, at least 4.0 W/m-K, or in some cases, at least 5.0 W/m-K.

The inventive thermally conductive PEEK nanocomposite polymers exhibit tensile strength of at least 70 MPa, or at least 80 mPa, at 25 deg C.

The inventive thermally conductive PEEK nanocomposite polymers exhibit tensile strength in a range of at least 25 MPa, or at least 30 MPa at 160 deg C.

The inventive thermally conductive PEEK nanocomposite polymers exhibit tensile strength in a range of at least 15 MPa or at least 20 MPa at 190 deg C.

In some cases, the inventive thermally conductive, electrically insulating PAEK nanocomposite polymers exhibit a volume resistivity of > 10¹² ohm-cm, or >10¹⁴ ohm-cm when tested under ASTM D257.

The inventive thermally conductive PAEK nanocomposite polymers exhibit Melt Flow Index (MFI) of at least 14 g/10 min, or in some cases, at least 20 g/10 min, or at least 25 g/10 min, at least 30 g/10 min, or at least 35 g/10 min. In some cases, the inventive thermally conductive PAEK nanocomposite polymers exhibit MFI in the rage of 12-60 g/10 min, 14-50 g/10 min, or 14-40 g/10 min.

### PAEK Base Resin

The thermally conductive PAEK nanocomposite polymers are prepared from a composition comprising a PAEK base resin, a plurality of conductive fillers and a flow modifier and dispersing agent. Poly(aryl ether ketones) (PAEK) is a family of semi-crystalline thermoplastics with high temperature stability and high mechanical strength, but can suffer from low thermal conductivity, low comparative tracking index, and an upper limit on dielectric breakdown strength and partial discharge resistance.

The PAEK molecular backbone contains alternating ketone (R-CO-R) and ether groups (R-O-R). The linking R group is typically a 1,4-substituted aryl group. The PAEK base resin may be any appropriate PAEK resin. In some cases, the PAEK polymer may be selected from the group consisting of a poly(ether ether ketone) (PEEK) and a poly(aryl ether ketone ketone) (PEKK). The base PEEK resin may be a medium to high viscosity PEEK resin. The base PEEK resin may be unreinforced. PEEK resins may be obtained by step-growth polymerization by the dialkylation of bisphenolate salts. It involves reaction of, e.g., 4,4'-difluorobenzophenone or 1,4-bis(4-fluorobenzoyl) benzene with hydroquinone in the presence of alkali carbonates. The polymer is then isolated by removal of alkali metal fluoride and the polymerization solvent.

PAEK resins may be processed by conventional methods such as injection molding, extrusion, compression molding, etc. However, addition of various additives can increase viscosity. The processing conditions used to mold PEEK can influence the crystallinity, and hence the mechanical properties. As a linear thermoplastic, polyether ether ketone can be melt processed in the temperature range of about 370 to about 420°C. While processing polyether ether ketone, no corrosive gases are evolved.

PEEK resins are commercially available. Compared to PEKK, PEEK has a lower glass transition temperature, higher extrusion temperature (-360-400 deg C). The PEEK resin may be a commercially available PEEK resin. The PEEK resin may be selected from, for example, a Victrex PEEK such as VICTREX^{®}, VICTREX^{™} PEEK ^{™} (Victrex plc), Dow DuPont PEEK (Vespel), Quadrant PEEK (Ketron), a SAB1C PEEK such as, for example, LNP^{™} THERMOCOMP^{™}, LNP^{™} LUBRICOMP^{™}, LNP^{™} STAT-KON^{™}, Lehman & Voss PEEK such as, for example, LUVOCOM^{®}, RTP Company PEEK such as, for example, RTP 2200 Series; Solvay PEEKs such as, for example, KeTaSpire^{®}, Solviva^{®} Zeniva^{®}, Tribocomp^{®}, and Evonik PEEKs such as, for example, VESTAKEEP^{®} PEEKs. The PEEK resin may be an unreinforced PEEK resin. The PEEK maybe semi-crystalline. The PEEK may be in the form of granules. The PEEK resin may have a melt viscosity at 400 °C of between about 130 Pa.s and about 500 Pa.s. The PAEK resin may have a medium to high melt viscosity of between about 300 Pa.s and about 500 Pa.s under ISO 11443. The melt viscosity may be measured as [1000 s⁻¹]/Pa.s. In some cases, the base PAEK is not blended with a polyamide such as a nylon material. In some cases, the base PAEK resin is unreinforced. In some cases, the base PAEK resin may be semi crystalline.

PEKK resins are commercially available. Compared to PEEK, PEKK has a high dielectric strength, easier to 3Dprint for additive manufacturing, doesn't release toxic smoke, and has a lower extrusion temperature (~340-360 deg C). PEKK may have a melting point of about 300 deg C to about 360 deg C depending on grade. PEKK is commercially available from, for example, as KEPSTAN^{®} PEKK from Arkema, LUVOCOM^{®} 3F PEKK from Lehvoss, and OXPEKK^{®} Oxford Performance Materials.

In some cases, the base PAEK resin is a medium viscosity unreinforced polyether ether ketone for injection molding. In some cases, a melt temperature for PEEK resin may be between 360 deg C and 400 deg C or 360 deg C to 380 deg C may be employed during the injection molding process. In some cases, the mold temperature may be within a range of ∼160 deg C to -200 deg C.

The base PAEK resin may be present in the composition in an amount within a range of from about 30 wt% to about 80 wt%, about 40 wt% to about 70 wt%, about 50 wt% to about 65 wt%, 53 wt% to about 60 wt%, or about 55 wt% to about 57 wt.

### Thermally Conductive Fillers

The thermally conductive PAEK nanocomposite polymers are prepared from a composition comprising a PAEK base resin, a plurality of conductive fillers and a flow modifier and dispersing agent. The thermally conductive PAEK nanocomposite compositions comprise two or more thermally conductive fillers. The compositions can comprise a plurality of thermally conductive fillers. The thermally conductive filler may have a low electrical conductivity or is electrically insulating. The thermally conductive filler may be a thermally conductive and electrically insulating filler. In some cases, the thermally conductive filler does not include a metal, carbon, or graphite filler. The thermally conductive filler may be a ceramic filler.

The ceramic fillers that are thermally conductive and electrically insulating may be selected from boron nitride (BN), aluminum nitride (AlN), boron nitride-aluminum nitride composite (BN-AlN), silicon nitride (Si₃N₄), silicon carbide (SiC), aluminum oxide (Al₂O₃), zinc oxide (ZnO), and magnesium oxide (MgO). In some cases, the thermally conductivity fillers may be selected from nano boron nitride, micro boron nitride, aluminum oxide, aluminum nitride, and MgO. In some cases, the thermally conductive fillers may be boron nitride (BN).

The thermally conductive nanocomposite composition may comprise a boron nitride filler. Examples of suitable boron nitride materials include boron nitride particles, boron nitride agglomerates, or a mixture thereof. BN exists in four crystalline forms hexagonal BN (hBN), cubic BN (cBN), rhombohedral BN (rBN), and wurtzite BN (wBN). In some cases, the BN may be hexagonal crystal form Boron Nitride (hBN) which offers low density and low coefficient of friction. In some cases, the boron nitride particles can be in the shape of platelets or flakes.

Suitable boron nitride materials may include hBN, platelet boron nitride and boron nitride agglomerates commercially available from Momentive Performance Materials or Saint Gobain. Hexagonal boron nitride (hBN) is available commercially as CARBOTHERM^{™} BN Powder, Saint Gobain.

The thermally conductive filler may include a thermally conductive ceramic platelet filler, such as, for example, hexagonal BN platelets, having a particle size distribution D50 in a range of 0.5-190 micrometers, 2-14 micrometers, 6-12 micrometers, 2-6 micrometers, 4.5-8 micrometers, 5-8 micrometers, 6-9.5 micrometers, 6-12 micrometers, or 8-14 micrometers. Thermally conductive ceramic platelet fillers are available commercially, for example, from Saint Gobain or Momentive Company.

The thermally conductive filler may include submicron fillers such as BN powder grade agglomerate of submicron hexagonal crystals. For example, the mean particle size may be in a range of 0.1 micron to about 0.9 microns, or about 0.5 microns. The D10/D90 may be 0.2/4.0 microns.

The thermally conductive filler may include a thermally conductive ceramic flake filler, such as, for example, boron nitride filler flakes. In some cases the BN flakes may be a hexagonal crystal form BN microfiller. In some cases, the thermally conductive ceramic flake filler has a particle size distribution D50 in a range of 65-530 micrometers, 65-210 micrometers, 140-400 micrometers, 140-240 micrometers, or 160-400 micrometers. Boron nitride filler flakes are commercially available, for example, from Saint Gobain or Momentive Company.

In some cases, the boron nitride filler may comprise a majority of the thermally conductive fillers added in the composition.

The thermally conductive filler may include a thermally conductive microfiller. In some cases, the thermally conductive microfiller is a BN microfiller. The BN microfiller may have a hexagonal crystal structure. In some cases, the thermally conductive BN microfiller can can have a D50 particle size in a range of about 0.3 to about 200 microns or about 7 to about 180 microns. The boron nitride microfiller particles can have a surface area of from about 0.5 to about 20 m²/gram, or about 10 to about 20 m²/gram. In some cases, the boron nitride microfiller can have a thermal conductivity of 30-130 W/m-K.

The thermally conductive filler may include a thermally conductive nanofiller. The thermally conductive nanofiller may be a boron nitride nanopowder. Boron nitride nanopowder is commercially available from, e.g., US Research Nanomaterials, Inc. The BN nanopowder may have a hexagonal crystal structure. The BN nanopowder average particle size (APS) may have diameter in a range of about 200 to about 800 nm and a thickness in a range of about 10 nm to about 40 nm. The BN nanopowder APS may have diameter 200 nm, thickness 10 nm; diamter 500 nm, thickness 20 nm; or diameter 800 nm, thickness 40 nm. In some cases, the boron nitride nanofiller may have thermal conductivity of 700-758 W/m-K at room temperature.

The thermally conductive filler may include a first thermally conductive microfiller and a second thermally conductive microfiller.

The first thermally conductive microfiller may be a thermally conductive ceramic flake filler. The thermally conductive ceramic flake filler may be present in the composition in a range between about 5 wt% to about 30 wt%, about 5 wt% to about 20wt%, 7 wt% to 17 wt%, or about 10 wt% to about 15 wt%.

The second thermally conductive filler may be a thermally conductive ceramic platelet filter. The thermally conductive ceramic platelet filler may be present in the composition in a range between about 15 wt% to about 40 wt%, about 15 wt% to about 30 wt%, 17 wt% to 27 wt%, or about 20 wt% to about 25 wt%.

The weight ratio of first conductive filler to second conductive filler may be from about 1:6 to about 4:3, from about 1:4 to about 1:1, or from about 2:5 to about 3:4.

The total thermally conductive filler may be present in the composition in a combined range between about 20 wt% to about 70 wt%, about 25 wt% to about 60 wt%, about 30 wt% to about 50 wt%, about 35 wt% to about 45 wt%, or about 38 wt% to about 44 wt%.

### Flow Modifiers and Dispersing Agents

The thermally conductive PAEK nanocomposite polymers are prepared from a composition comprising a PAEK base resin, a plurality of conductive fillers and one or more flow modifier and dispersing agents ("processing agents"). In some cases, the dispersing and processing additive is selected from the group consisting of nanostructured flow modifiers, silanes, waxes, liquid crystal polymers, calcium stearates, polyhexylbenzothioamide (PHBTA), and polyhexyl phenylacetamide (PHPA). In some cases, the nanostructured flow modifier is selected from the group consisting of polyhedral oligomeric silsesquioxanes (POSS) and silanol-POSS. In some cases, the dispersing and processing agents are selected from the group consisting of polyhedral oligomeric silsesquioxanes (POSS), silanes, silanol -POSS, and waxes. The flow modifier and dispersing agent may be a nanostructured flow modifier such as a polyhedral oligomeric silsesquioxane (POSS) or silanol POSS. POSS and silanol POSS molecules can include a cage-like structure with an inorganic silsesquioxane at the core and one or more organic groups attached to the cage. The dispersing additive may be used to improve the dispersion of the processing agents throughout the polymer matrix. For example, polyhedral oligomeric silsesquioxane (POSS) may be used by itself as an additive, e.g., OctaIsobutyl POSS, TriSilanolPhenyl POSS, TriSilanolIsobutyl POSS, cyclopentyl POSS, cyclohexyl POSS, or as a flow or dispersion additive (e.g., silanol-POSS). In some cases, the POSS materials are nanostructured with at least one dimensionin a range of 1-100 nm, 1-70 nm, 1-40 nm, or 1-3 nm. The POSS compounds may be purchased commercially, for example, from Hybrid Plastics. In a specific composition, the dispersing and processing additive is a POSS. The PAEK nanocomposite compositions comprise one or more dispersing and processing agents within the range of from about 0.1 wt% to about 10 wt%, about 1 wt% to about 5 wt%, about 2 to about 3 wt%.

### Optional Stuctural Fillers

The PAEK nanocomposite compositions may optionally include one or more structural fillers. In some cases, the PEEK nanocomposite composition or polymer further includes a structural fiber filler. The structural filler comprises stuctural fibers comprising elongated or fiber-shaped particles. Structural fibers may be selected from glass fiber, high silica glass fiber, aluminum silicate fiber, ceramic fiber, mullite fiber, basalt fiber, and carbon fiber. In some cases, the PEEK nanocomposite composition or polymer does not include a carbon fiber. In some cases, the structural fillers may be selected from glass fibers and basalt fibers. In some cases, the structural fillers may be high silica glass fiber. The structural fillers may include structural nanofillers or structural microfillers. The optional structural fibers may be present at 0-30 wt%, 0.5-20 wt%, or 1-10 wt%.

### Optional Spherical Nanofillers

The PAEK nanocomposite compositions and polymers may optionally include one or more spherical nanofillers. The spherical nanofillers may be spherical or globular or roughly spherical in shape. The spherical nanofiller may be used to help control rheological properties. The spherical nanofiller may be used as a thickening agent or thixotropic agent. The spherical nanofiller may be used as a reinforcing agent. The spherical nanofillers may be selected from fused silica, Nano Alumina, nano silica, boron nitride, fumed alumina, ZnO, and TiO₂. In some cases, the spherical nanofiller may be partially (e.g., ~40 to ∼60%) fused into short chains, e.g., 0. 1-0.2 microns in length, or about 10-30 units in length. In some cases, the spherical nanofiller may be a fumed silica nanofiller. The spherical nanofiller may include fused silica commercially available from, e.g., Gelest, Inc. or American Elements. Fused silica may also be know as fused silicon dioxide. The spherical nanofiller may include aluminum oxide commercially available from, e.g., Alfa Aesar. The spherical nanfiller may have a particle size in a range of 1-100 nm or 5-50 nm. The spherical nanofillers may be present in the composition in a range from about 0 wt% to about 5 wt%, about 0.5 wt% to about 4 wt%. or about 1 wt% to about 3 wt%.

### Properties

Melt Flow Index (MFI), also known as Melt mass-Flow Rate (MFR), or Melt Flow Rate, is rate of extrusion of a molten resin through a die of specified length and diameter under prescribed conditions of temperature, load and piston position in the cylinder of an extrusion plastometer, the rate being determined as the mass extruded over a specified time. MFI, also known as MFR, is expressed in grams per 10 min. MFI, Melt mass-flow rate (MFR) and melt volume-flow rate (MVR) may be determined under ASTM D1238-23. The MFI may be measured at 380 °C, 5 kg. Determination of the melt mass-flow rate (MFR) and melt volume-flow rate (MVR) of thermoplastics. The ASTM D1238 may be employed as standard test method for Melt Flow Rates of thermoplastics by extrusion plastometer.

The Melt Flow Index (MFI) can be used as a routine indicator of rheological behavior. Higher Melt Flow Index correlates with lower viscosity resin. As the resin viscosity decreases, the flow per unit time increases. Lower melt flow index or fewer grams passing through the die in 10 minutes relates to higher viscosity.

In some cases, the thermally conductive PAEK nanocomposite materials of the disclosure exhibit Melt Flow Index (MFI) in a range between about 12 g/10 min to about 60 g/10 min., about 14 g/10 min to about 50 g/10 min, or about 14 g/10 min to about 40 g/10 min. The thermally conductive PAEK nanocomposite materials of the disclosure exhibited Melt Flow Index (MFI) in a range between 14 g/10 min to 40 g/10 min, as shown in FIG. 1.

Melt volume-flow rate (MVR) is rate of extrusion of a molten resin through a die of specified length and diameter under prescribed conditions of temperature, load, and piston position in the cylinder of an extrusion plastometer, the rate being determined as the volume extruded over a specified time. MVR is expressed in cubic centimeters per 10 min. Load is combined force exerted by mass of the piston and the added weight, or weights specified by conditions of the test. Load is expressed as the mass, in kilograms, exerting it. Standard die has nominal length 8,000 mm and nominal bore of 2,095 mm. half size die has nominal length of 4,000 mm and a nominal bore of 1,050 mm.

In the present disclosure, the tensile strength, tensile modulus, and elongation at break may be measured using ASTM D638-03 standard or ISO 527-2, for example, using Instron 3369. Toughness can be measured as the area under the stressstrain curve. Impact strength can be determined by ASTM D 256-23e1, Izod notched impact test method, can be measured using Ceast 9000. Tensile elongation can be measure by ASTM D638-03. Flexural strength and flexural modulus can be measured by ASTM D790-17. Tensile properties may be measured on an Instron UTM and impact strength on a TMI Impact Tester according to ASTM standards D638 and D256, respectively. Tensile strength is the amount of force that can be applied to a plastic before it yields (stretches irreparably) or breaks. Tensile elongation is the percentage increase in length after break divided by the original length. Greater elongation indicates greater ductility. Tensile fatigue may be measured under ASTM D3479 standard test method for tension-tension fatigue of polymer matrix materials.

In some cases, the thermally conductive PAEK nanocomposite polymer exhibits tensile strength of >70.0 MPa or >75.0 MPa at RT, as shown in FIG. 2. In some cases, the thermally conductive PAEK nanocomposite polymer exhibits tensile strength of >25.0 MPa or >30.0 MPa at 160 deg C, as shown in FIG. 2.

Thermal Conductivity may be measured using hot disc method ISO 22007-2:2022. The thermal conductivity can be measured using a hot plate transient plane heat source (hot disc) method with a ThermTest TPS2500. Alternatively, thermal conductivity may be measured under ASTM F433. In some cases, the inventive thermally conductive PAEK nanocomposite polymers can exhibit a thermal conductivity of at least 3.5 W/m-K, at least 4.0 W/m-K, or at least 5.0 W/m-K, as shown in FIG. 2.

The through-plane thermal conductivity can be measured according to ASTM E1461. Through-plane thermal conductivity may be measured at the center of the tab portion of an ASTM standard dog-bone away from the molding gate using the laser flash method (ASTM E1461) utilizing the theoretical specific heat capacity (Cₚ) values based on the composition. The in-plane thermal conductivity can be measured by constructing a laminate sample from the same location as the through-plane measurement method where the laminate sample is constructed in such a way that the thermal conductivity in the plane of the dog-bone sample can be measured either in the flow direction or perpendicular to the flow direction.

Dielectric constant and dissipation factor may be measured according to 1EC 60250 or ASTM D150-22. Dielectric strength can be measured by ASTM D149-20, IEC 243-1, or IEC 60243. Surface resistivity, volume resistivity may be measured under ASTM D257-14(2021)e1, or IEC 62631-3-1, electrical conductivity can be measured according to ASTM D257-14(2021)e1 and ASTM D4496-21.

Particle size may be determined using any appropriate method. In some cases, particle size may be determined using a Malvern instrument. In some cases, particle size may be determined by dynamic light scattering (DLS) for particles <1 nm to > 1 micrometer. In some cases, particle size distribution may be determined by laser diffraction for <100 nm to > 2 mm. Laser diffraction can be performed according to ISO 13320:2020. Average particle size (APS) may be determined by ISO 9276 test method. D50 is a particle size metric that represents the size in microns that splits the distribution with half above and half below this diameter.

For lab-scale experiments, the compounding can be carried out in a twin screw extruder (e.g., a 16, 26, or 38 mm extruder) or a Brabender Plasticorder batch mixer. In some cases, the compounded sample may be subjected to an extrusion coating process.

### Processing

PAEK materials are semi-crystalline thermoplastics and are processable by ay suitable technology used for other semi-crystalline thermoplastics. Parts with tight tolerances can be achieved using injection molding. Processing technologies may include gas-assisted injection molding, foaming, blow molding, micro injection molding,

The PAEK composite polymer materials PAEK can be molded on standard injection molding machines. Depending on grade of PAEK, processing temperatures can vary from about 350 to about 400 deg C. In some cases, PAEK pellets may absorb moisture from the air, so the pellets may be dried on trays in circulating ovens for 2-3 h or overnight at ~150-160 deg C. Dehumidifying or desiccant dryers may also be used. Preferably, the residual moisture should be reduced to <0.02%. For PEEK composites, mold temperatures should be maintained between 170-200 deg C.

### Uses

The thermally conductive PAEK nanocomposite polymers are useful for aerospace, automotive, electronics, and aviation purposes, as well as industrial and medical purposes. These materials can be used for enclosures, battery cases, heat sinks, high power connectors (e.g., 450A to 850 A), electrical power distributors, connectors for aircraft engines, external lighting, electric power systems, and electric actuators. In a specific case, the thermally conductive PAEK nanocomposite polymers are useful for stator encapsulation. The thermally conductive PAEK nanocomposite polymer encapsulated stator may be formed through an aperture in which the rotor is positioned. Adjacent each end of the aperture that may be formed integrally with the covering a means for supporting bearings which in turn support the motor for rotational movement. Thermally conductive and electrically insulating PAEK nanocomposite materials are provided that can perform at elevated temperatures (up to 200 deg C or higher). Thermally conductive and electrically insulating PAEK nanocomposite materials provided herein can be used to improve efficiency and durability of electric motors, and electronic devices such as batteries, invertors, voltage converters, electronic control units, wire harnesses, sensors, and switches.

### EXAMPLES

### Example 1. Compositions

For lab-scale experiments, the compounding was carried out in compounding can be carried out in a twin screw extruder or a Brabender Plasticorder batch mixer. In some cases, the compounded sample was subjected to an injection molding or extrusion process. Materials shown in Table 1 were mixed, heated, and extruded to provide test sample coupons for analysis. At least 7 different thermally conductive PAEK nanocomposite formulations were prepared according to Table 1 having from 38-44 wt% combined thermally conductive filler. Large batch production material was extruded using a twin screw extruder for stator encapsulation trials.

### Example 2. Material Tests

Melt flow index (MFI) of inventive PEEK nanocomposite polymers, comparative base PEEK resin, and commercial PEEK composite with 30 wt% carbon fiber was measured according to ASTM D1238 at 380 °C and 5 kg. The inventive polymers were prepared from 4 different thermally conductive PAEK nanocomposite formulations prepared according to Table 1 having from 38-44 wt% combined thermally conductive filler and 2-5 wt% nanostructured flow modifier. Results are shown in FIG. 1. The commercially available PEEK composite with 30 wt% carbon fiber exhibited MFI of 10 g/10 min. The test formulations exhibited significantly higher MFIs of from 14-40 g/10 min despite having increased filler load compared to commercially available 30 wt% carbon fiber filled PEEK composite. The higher MFI values correlate with lower viscosity for inventive thermally conductive PEEK nanocomposites.

Tensile strength was measured according to ASTM D638 for 3 inventive polymers at three different temperatures: RT, 160 deg C and 190 deg C. Inventive polymers were prepared from different thermally conductive PAEK nanocomposite formulations prepared according to Table 1 having from 38-44 wt% combined thermally conductive filler. Results are shown in FIG. 2.

The inventive thermally conductive PEEK nanocomposite polymers prepared from the test formulations exhibited tensile strength in a range of from about 80 MPa to about 90 MPa at RT, as shown in FIG. 2.

The inventive thermally conductive PEEK nanocomposite polymers prepared from the test formulations exhibited tensile strength in a range of from about 30 MPa to about 41 MPa at 160 deg C, as shown in FIG. 2.

The inventive thermally conductive PEEK nanocomposite polymers prepared from the thermally conductive PEEK nanocomposite test formulations exhibited tensile strength in a range of from about 20 MPa to about 32 MPa at 190 deg C, as shown in FIG. 2.

Thermal Conductivity was measured according to using hot disc method ISO22007-2:2022 for 3 different thermally conductive PAEK nanocomposite formulations prepared according to Table 1 having from 38-44 wt% combined thermally conductive filler. Results are shown in FIG. 2. The thermally conductive PAEK nanocomposite materials prepared from the formulations according to Table 1 exhibited a thermal conductivity in a range between about 3.5 to about 6.0 W/(m-K). Typical thermal conductivity of base PEEK resin was 0.25 W/m-K.

### Clauses

Clause 1. A thermally conductive polymer composite material prepared from a composition comprising a poly(aryl ether ketone) (PAEK) resin; a plurality of thermally conductive ceramic fillers; and a dispersing and processing additive.

Clause 2. The thermally conductive polymer composite material according to clause 1, wherein the PAEK base resin is selected from the group consisting of a poly(ether ether ketone) (PEEK) and a poly(aryl ether ketone ketone) (PEKK).

Clause 3. The thermally conductive polymer composite material according to clause 1 or 2, wherein the composition comprises the PAEK base resin in a range of from about 30 wt% to about 80 wt%, about 50 wt% to about 65 wt%, or about 55 wt% to about 57 wt%.

Clause 4. The thermally conductive polymer composite material according to any one of clauses 1 to 3, wherein the plurality of thermally conductive ceramic fillers are independently selected from the group consisting of selected from boron nitride (BN), aluminum nitride (AIN), boron nitride-aluminum nitride composite (BN-AlN), silicon nitride (Si₃N₄), silicon carbide (SiC), aluminum oxide (Al₂O₃), zinc oxide (ZnO), and magnesium oxide (MgO).

Clause 5. The thermally conductive polymer composite material according to any one of clauses 1 to 4, wherein the plurality of thermally conductive ceramic fillers comprise a first thermally conductive filler comprising a thermally conductive ceramic flake filler; and a second thermally conductive filler comprising a thermally conductive ceramic platelet filler, optionally further comprising thermally conductive ceramic filler clusters.

Clause 6. The thermally conductive polymer composite material according to clause 5, wherein the thermally conductive ceramic flake filler has a particle size distribution D50 in a range of about 65 micrometers to about 530 micrometers.

Clause 7. The thermally conductive polymer composite material according to clause 5, wherein the thermally conductive ceramic platelet filler has a particle size distribution D50 in a range of about 0.5 micrometers to about 190 micrometers.

Clause 8. The thermally conductive polymer composite material according to clause 5, wherein the composition comprises first thermally conductive filler in a range from about 5 wt% to about 30 wt%, about 5 wt% to about 20 wt%, or about 10 wt% to about 15 wt%.

Clause 9. The thermally conductive polymer composite material according to clause 5, wherein the composition comprises the second thermally conductive ceramic filler in a range from about 15 wt% to about 40 wt%, about 15 wt% to about 30 wt%, or about 20 wt% to about 25 wt%.

Clause 10. The thermally conductive polymer composite material according to clause 5, wherein the composition comprises the weight ratio of first conductive ceramic filler to second conductive ceramic filler is from about 1:6 to about 4:3, from about 1:4 to about 1:1, or from about 2:5 to about 3:4.

Clause 11. The thermally conductive polymer composite material according to any one of clauses 1 to 10, wherein the composition comprises the plurality of thermally conductive ceramic fillers in a combined range between about 20 wt% to about 70 wt%, about 25 wt% to about 60 wt%, about 30 wt% to about 50 wt%, about 35 wt% to about 45 wt%, or about 38 wt% to about 44 wt%.

Clause 12. The thermally conductive polymer composite material according to any one of clauses 1 to 11, wherein the dispersing and processing additive is selected from the group consisting of nanostructured flow modifiers, silanes, waxes, liquid crystal polymers, calcium stearates, polyhexylbenzothioamide (PHBTA), and polyhexyl phenylacetamide (PHPA).

Clause 13. The thermally conductive polymer composite material according to clause 12, wherein the nanostructured flow modifier is selected from the group consisting of polyhedral oligomeric silsesquioxanes (POSS) and silanol-POSS,

Clause 14. The thermally conductive polymer composite material according to any one of clauses 1 to 13, wherein the composition comprises the dispersing and processing additive in a range from about 0.1 wt% to about 10 wt%, about 1 wt% to about 5 wt%, or about 3 wt% to about 5 wt%.

Clause 15. The thermally conductive polymer composite material according to any one of clauses 1 to 14, wherein the composition further comprises one or more structural fillers, optionally wherein the structural fillers are selected from the group consisting of glass fiber, high silica glass fiber, aluminum silicate fiber, ceramic fiber, mullite fiber, basalt fiber, and carbon fiber.

Clause 16. A thermally conductive polymer composite material according to any one of clauses 1 to 15, prepared from a composition comprising 50-65 wt% of a polyaryletherketone (PAEK); 5-20 wt% of a thermally conductive ceramic flake filler; 15-30 wt% of a thermally conductive ceramic platelet filler, optionally further comprising thermally conductive ceramic filler clusters; and 1-5 wt% of a nanostructured flow modifier.

Clause 17. The thermally conductive polymer composite material according to any one of clauses 1 to 16, wherein the polymer composite material exhibits one or more of:melt flow index (MFI) > 14 g/10 min, > 20 g/ 10 min, > 25 g/10 min, > 30 g/10 min, or > 35 g/10 min at 380 °C, 5 kg; thermal conductivity > 3.0 W/m-K, or > 3.5 W/m-K; tensile strength at 25 deg C > 70 MPa, or > 80 MPa; tensile strength at 160 deg C > 25 MPa, or > 30 MPa; and tensile strength at 190 deg C > 15 MPa, or > 20 MPa.

Clause 18. A method of making a PAEK nanocomposite encapsulated stator, the method comprising mixing a PAEK nanocomposite composition; heating the PAEK nanocomposite composition to a processing temperature to form a melt processed PAEK nanocomposite composition; extruding and/or injection molding the melt processed PAEK nanocomposite composition around at least a portion of a stator; and cooling the extruded PAEK nanocomposite to provide the encapsulated stator, wherein the PAEK nanocomposite composition is according to any one of clauses 1 to 17.

Clause 19. The method of clause 18, wherein the processing temperature is between about 350 and about 400 deg C.

Clause 20. An insulated article coated with the thermally conductive polymer composite material according to any one of clauses 1 to 17.

Clause 21. The insulated article according to clause 20, the article selected from the group consisting of a stator, enclosure, battery case, heat sink, electric motor, , power connectors, electrical power distributorss, connectors for aircraft engines, external lighting, electric power systems, electric actuators, and electronic device.

Clause 22. The insulated article according to clause 21, wherein the electronic device is selected from the group consisting of a battery, invertor, voltage converter, electronic control unit, wire harness, sensor, and switch.

The above specification, examples and data provide a complete description of the manufacture and use of the composition of the invention. Since many embodiments of the invention can be made without departing from the spirit and scope of the invention, the invention resides in the claims hereinafter appended

## Claims

1. A thermally conductive polymer composite material prepared from a composition comprising a poly(aryl ether ketone) (PAEK) resin; a plurality of thermally conductive ceramic fillers; and a dispersing and processing additive.

2. The thermally conductive polymer composite material according to claim 1, wherein the PAEK base resin is selected from the group consisting of a poly(ether ether ketone) (PEEK) and a poly(aryl ether ketone ketone) (PEKK),
optionally wherein the composition comprises the PAEK base resin in a range of from about 30 wt% to about 80 wt%, about 50 wt% to about 65 wt%, or about 55 wt% to about 57 wt%.

3. The thermally conductive polymer composite material according to claim 1 or 2, wherein the plurality of thermally conductive ceramic fillers are independently selected from the group consisting of selected from boron nitride (BN), aluminum nitride (AlN), boron nitride-aluminum nitride composite (BN-AlN), silicon nitride (Si₃N₄), silicon carbide (SiC), aluminum oxide (Al₂O₃), zinc oxide (ZnO), and magnesium oxide (MgO), optionally wherein the plurality of thermally conductive ceramic fillers comprise
a first thermally conductive filler comprising a thermally conductive ceramic flake filler; and
a second thermally conductive filler comprising a thermally conductive ceramic platelet filler, optionally further comprising thermally conductive ceramic filler clusters.

4. The thermally conductive polymer composite material according to claim 3, wherein the
thermally conductive ceramic flake filler has a particle size distribution D50 in a range of about 65 micrometers to about 530 micrometers.

5. The thermally conductive polymer composite material according to claim 3 or 4, wherein the thermally conductive ceramic platelet filler has a particle size distribution D50 in a range of about 0.5 micrometers to about 190 micrometers.

6. The thermally conductive polymer composite material according to any one of claims 3-5, wherein the composition comprises first thermally conductive filler in a range from about 5 wt% to about 30 wt%, about 5 wt% to about 20 wt%, or about 10 wt% to about 15 wt%.

7. The thermally conductive polymer composite material according to any one of claims 3-6, wherein the composition comprises the second thermally conductive ceramic filler in a range from about 15 wt% to about 40 wt%, about 15 wt% to about 30 wt%, or about 20 wt% to about 25 wt%.

8. The thermally conductive polymer composite material according to any one of claims 3-7, wherein the composition comprises the weight ratio of first conductive ceramic filler to second conductive ceramic filler is from about 1:6 to about 4:3, from about 1:4 to about 1:1, or from about 2:5 to about 3:4.

9. The thermally conductive polymer composite material according to any one of claims 1-8, wherein the composition comprises the plurality of thermally conductive ceramic fillers in a combined range between about 20 wt% to about 70 wt%, about 25 wt% to about 60 wt%, about 30 wt% to about 50 wt%, about 35 wt% to about 45 wt%, or about 38 wt% to about 44 wt%.

10. The thermally conductive polymer composite material according to any one of claims 1-9, wherein the dispersing and processing additive is selected from the group consisting of nanostructured flow modifiers, silanes, waxes, liquid crystal polymers, calcium stearates, polyhexylbenzothioamide, and polyhexyl phenylacetamide, optionally wherein the
nanostructured flow modifier is selected from the group consisting of polyhedral oligomeric silsesquioxanes (POSS) and silanol-POSS, and
further optionally wherein the composition comprises the dispersing and processing additive in a range from about 0.1 wt% to about 10 wt%, from about 1 wt% to about 5 wt%, or about 3 wt% to about 5 wt%.

11. The thermally conductive polymer composite material according to any one of claims 1-10, wherein the composition further comprises one or more structural fillers, optionally wherein the structural fillers are selected from the group consisiting of glass fiber, high silica glass fiber, aluminum silicate fiber, ceramic fiber, mullite fiber, basalt fiber, and carbon fiber.

12. The thermally conductive polymer composite material according to any one of claims 1-11, prepared from a composition comprising
50-65 wt% of a polyaryletherketone (PAEK);
5-20 wt% of a thermally conductive ceramic flake filler;
15-30 wt% of a thermally conductive ceramic platelet filler, optionally further comprising thermally conductive ceramic filler clusters; and
1-5 wt% of a nanostructured flow modifier.

13. The thermally conductive polymer composite material according to any one of claims 1-12, wherein the polymer composite material exhibits one or more of:
melt flow index (MFI) > 12 g/10 min, > 14 g/10 min, > 20 g/ 10 min, > 25 g/10 min, > 30 g/10 min, or > 35 g/10 min at 380 °C, 5 kg;
thermal conductivity > 3.0 W/m-K, or > 3.5 W/m-K;
tensile strength at 25 deg C > 70 MPa, or > 80 MPa;
tensile strength at 160 deg C > 25 MPa, or > 30 MPa; and
tensile strength at 190 deg C > 15 MPa, or > 20 MPa.

14. A method of making a PAEK nanocomposite encapsulated stator, the method comprising
mixing a PAEK nanocomposite composition;
heating the PAEK nanocomposite composition to a processing temperature to form a melt processed PAEK nanocomposite composition;
extruding the melt processed PAEK nanocomposite composition around at least a portion of a stator; and
cooling the extruded PAEK nanocomposite to provide the encapsulated stator,
wherein the PAEK nanocomposite composition comprises a poly(aryl ether ketone) (PAEK) resin; a plurality of thermally conductive ceramic fillers; and a dispersing and processing additive according to any one of claims 1-13.

15. An insulated article coated with the thermally conductive polymer composite material according to any one of claims 1-13, optionally wherein the article is selected from the group consisting of a stator, enclosure, battery case, heat sink, electric motor, power connector, electrical power distributor, connectors for aircraft engines, external lighting, electric power system, electric actuator, and electronic device, further optionally wherein the electronic device is selected from the group consisting of a battery, invertor, voltage converter, electronic control unit, wire harness, sensor, and switch.
